# EUROPEAN PATENT APPLICATION

(11) **EP 4 691 840 A1**
(43) Date of publication of application: **11.02.2026**
(21) Application number: 23929438.2
(22) Date of filing: 31.03.2023
(51) Int. Cl.: B60L 53/62, B60L 53/00, B60L 15/20

(54) **BOOST CHARGING METHOD, APPARATUS AND DEVICE, AND VEHICLE**

(71) Applicant: Shenzhen Yinwang Intelligent Technologies Co., Ltd., Shenzhen, Guangdong 518110 (CN)
(72) Inventor: KONG, Lingzhao, Shenzhen, Guangdong 518129 (CN); LI, Jinhang, Shenzhen, Guangdong 518129 (CN); HUANG, Xin, Shenzhen, Guangdong 518129 (CN); CHAI, Benben, Shenzhen, Guangdong 518129 (CN); DUAN, Chao, Shenzhen, Guangdong 518129 (CN); LI, Ying, Shenzhen, Guangdong 518129 (CN)
(74) Representative: MERH-IP Matias Erny Reichl Hoffmann Patentanwälte PartG mbB
(86) International application number: PCT/CN2023/085597
(87) International publication number: WO 2024/197853

(57) **Abstract**

A boost charging method and apparatus, a device, and a vehicle are disclosed, and relate to the field of vehicle technologies. The boost charging method includes: determining charging torque of a drive motor in a vehicle when the vehicle is in a boost charging state; determining a permitted charging current of the vehicle based on the charging torque, where the permitted charging current is an allowed maximum charging current; and charging the vehicle by using a charging current not greater than the permitted charging current. When boost charging is performed on the vehicle, impact and vibration caused by boost charging can be alleviated while ensuring a charging speed of the vehicle, to improve driving and riding experience.

## Description

### TECHNICAL FIELD

This application relates to the field of vehicle technologies, and in particular, to a boost charging method and apparatus, a device, and a vehicle.

### BACKGROUND

With rapid development of related technologies of electric vehicles, fast charging technologies of power batteries of the electric vehicles become increasingly important. Direct-current charging is a common charging manner for charging an electric vehicle. In this manner, a charging voltage is high and is usually 500 V to 800 V, and charging time is approximately 0.5 hour to 1 hour. Increasing a battery voltage is an important means to improve a direct-current charging speed and shorten charging time of the electric vehicle. For an electric vehicle equipped with a high-voltage power battery, a voltage of the power battery is usually higher than 700 V. At present, voltages of direct-current charging piles in markets may basically include 500 V, 750 V, and 1000 V. However, a battery pack of a high-voltage platform cannot be charged or fully charged by a charging pile of a low-voltage platform. For example, a direct-current charging pile of 500 V cannot be used for direct-current fast charging of a power battery of more than 700 V.

To meet a direct-current fast charging requirement of an electric vehicle, a direct-current boost circuit may be disposed in an electric vehicle with a high-voltage power battery. However, the direct-current boost circuit that is separately disposed has problems of high costs, a large volume, and a heavy weight. Currently, a commonly used solution in the industry is to use a power device in a motor drive system to boost a voltage and then charge a battery. In this solution, however, a current is also generated in a motor winding in a charging process, causing specific torque. This causes a vehicle to have noticeable impact or vibration at the end of charging, adversely affecting driving and riding experience.

### SUMMARY

This application provides a boost charging method and apparatus, a device, and a vehicle, to alleviate vehicle vibration caused by boost charging, and improve driving and riding experience.

According to a first aspect, a boost charging method is provided. The method includes: determining charging torque of a drive motor in a vehicle when the vehicle is in a boost charging state, where the vehicle may include one or more drive motors; determining a permitted charging current of the vehicle based on the charging torque, where the permitted charging current is an allowed maximum charging current; and charging the vehicle by using a charging current not greater than the permitted charging current, that is, charging the vehicle by using a charging current less than or equal to the permitted charging current. Optionally, the drive motor supports two-phase boost charging.

In the foregoing technical solution, when the vehicle is in the boost charging state, the charging torque of the drive motor in the vehicle may be determined; the permitted charging current of the vehicle is determined based on the charging torque, where the permitted charging current is the allowed maximum charging current; and finally, the vehicle is charged by using the charging current not greater than the permitted charging current. In this way, when boost charging is performed on the vehicle, impact and vibration caused by boost charging can be alleviated while ensuring a charging speed of the vehicle, to improve driving and riding experience.

In a possible implementation of the first aspect, the allowed maximum charging current includes a maximum charging current allowed when the vehicle is in a safe state. In the foregoing possible implementation, a charging speed of the vehicle can be improved as much as possible, and impact and vibration caused by boost charging can be alleviated while ensuring safety of the vehicle.

In a possible implementation of the first aspect, the allowed maximum charging current includes a maximum charging current allowed when noise vibration harshness NVH of the vehicle is less than a preset threshold. In the foregoing possible implementation, when it is ensured that the NVH of the vehicle is in an acceptable range, a charging speed of the vehicle can be improved as much as possible, and impact and vibration caused by boost charging can be alleviated.

In a possible implementation of the first aspect, determining the permitted charging current of the vehicle based on the charging torque includes: when a slope at which the vehicle is located is less than or equal to a preset slope, determining the permitted charging current of the vehicle based on the charging torque and parking braking torque of the vehicle. In the foregoing possible implementation, when the vehicle is on the ground with a specific slope, accuracy of the determined permitted charging current can be further improved, to ensure a charging speed of the vehicle and alleviate impact and vibration caused by boost charging.

In a possible implementation of the first aspect, determining the permitted charging current of the vehicle based on the charging torque and the parking braking torque of the vehicle includes: determining, from preset correspondence information based on the charging torque and the parking braking torque, a permitted charging current corresponding to the charging torque and the parking braking torque, where the preset correspondence information indicates permitted charging currents corresponding to different charging torque and different parking braking torque. In the foregoing possible implementation, the permitted charging current corresponding to the charging torque and the parking braking torque is determined based on the preset correspondence information, so that a speed and accuracy of determining the permitted charging current can be improved.

In a possible implementation of the first aspect, the method further includes: determining the parking braking torque of the vehicle based on the slope at which the vehicle is located and the charging torque. In the foregoing possible implementation, the parking braking torque of the vehicle is determined based on the slope at which the vehicle is located and the charging torque, so that a speed and accuracy of determining the parking braking torque can be improved.

In a possible implementation of the first aspect, determining the parking braking torque of the vehicle based on the slope at which the vehicle is located and the charging torque includes: determining slope force component torque based on a weight of the vehicle and the slope at which the vehicle is located; and determining the parking braking torque of the vehicle based on the slope force component torque and the charging torque. In the foregoing possible implementation, a simple and effective manner for determining the parking braking torque of the vehicle is provided.

In a possible implementation of the first aspect, determining the charging torque of the drive motor in the vehicle includes: determining the charging torque of the drive motor based on a phase of the drive motor. In the foregoing possible implementation, the charging torque of the drive motor can be rapidly and effectively determined based on the phase of the drive motor.

In a possible implementation of the first aspect, charging the vehicle by using the charging current not greater than the permitted charging current includes: charging the vehicle by using a gradually increasing charging current not greater than the permitted charging current, where an increase rate of the charging current is less than a preset rate. In the foregoing possible implementation, the increase rate of the charging current is kept less than the preset rate, to alleviate vehicle vibration caused by a rapid increase in the charging current.

According to a second aspect, a boost charging apparatus is provided. The apparatus includes: a first processing unit, configured to determine charging torque of a drive motor in a vehicle when the vehicle is in a boost charging state; a second processing unit, configured to determine a permitted charging current of the vehicle based on the charging torque, where the permitted charging current is an allowed maximum charging current; and an output unit, configured to charge the vehicle by using a charging current not greater than the permitted charging current. Optionally, the drive motor supports two-phase boost charging.

In a possible implementation of the second aspect, the allowed maximum charging current includes a maximum charging current allowed when the vehicle is in a safe state.

In a possible implementation of the second aspect, the allowed maximum charging current includes a maximum charging current allowed when noise vibration harshness NVH of the vehicle is less than a preset threshold.

In a possible implementation of the second aspect, the second processing unit is further configured to: when a slope at which the vehicle is located is less than or equal to a preset slope, determine the permitted charging current of the vehicle based on the charging torque and parking braking torque of the vehicle.

In a possible implementation of the second aspect, the second processing unit is further configured to determine, from preset correspondence information based on the charging torque and the parking braking torque, a permitted charging current corresponding to the charging torque and the parking braking torque, where the preset correspondence information indicates permitted charging currents corresponding to different charging torque and different parking braking torque.

In a possible implementation of the second aspect, the second processing unit is further configured to determine the parking braking torque of the vehicle based on the slope at which the vehicle is located and the charging torque.

In a possible implementation of the second aspect, the second processing unit is further configured to: determine slope force component torque based on a weight of the vehicle and the slope at which the vehicle is located; and determine the parking braking torque of the vehicle based on the slope force component torque and the charging torque.

In a possible implementation of the second aspect, the first processing unit is further configured to determine the charging torque of the drive motor based on a phase of the drive motor.

In a possible implementation of the second aspect, the output unit is further configured to charge the vehicle by using a gradually increasing charging current not greater than the permitted charging current, where an increase rate of the charging current is less than a preset rate.

According to a third aspect, a terminal device is provided. The terminal device includes a processor and a memory, the memory stores instructions, and the processor runs the instructions, to enable the terminal device to perform the boost charging method according to the first aspect or any one of the possible implementations of the first aspect. Optionally, the terminal device is a vehicle-mounted terminal.

According to another aspect of this application, a vehicle is provided. The vehicle includes the boost charging apparatus according to the second aspect or any one of the possible implementations of the second aspect, or the terminal device according to the third aspect.

According to another aspect of this application, a computer-readable storage medium is provided. The computer-readable storage medium stores instructions, and when the instructions are executed by a device, the device is enabled to perform the boost charging method according to the first aspect or any one of the possible implementations of the first aspect.

According to another aspect of this application, a computer program product is provided. The computer program product includes a computer program (which may also be referred to as code or instructions). When the computer program is run, a computer is enabled to perform the boost charging method according to the first aspect or any one of the possible implementations of the first aspect.

It may be understood that, for beneficial effects that can be achieved by any boost charging apparatus, the terminal device, the vehicle, the computer-readable storage medium, and the computer program product provided above, refer to the beneficial effects in the boost charging method provided above.

### BRIEF DESCRIPTION OF DRAWINGS

FIG. 1 is a diagram of charging a power battery according to an embodiment of this application;
FIG. 2 is a diagram of a structure of a terminal device according to an embodiment of this application;
FIG. 3 is a schematic flowchart of a boost charging method according to an embodiment of this application;
FIG. 4 is a diagram of charging torque corresponding to different rotor angle positions according to an embodiment of this application;
FIG. 5 is a diagram of a variation in wheel-end torque according to an embodiment of this application;
FIG. 6 is a diagram of a vehicle on the ground with a slope according to an embodiment of this application;
FIG. 7 is a schematic flowchart of another boost charging method according to an embodiment of this application;
FIG. 8 is a diagram of a relationship between different torque according to an embodiment of this application;
FIG. 9 is a schematic flowchart of still another boost charging method according to an embodiment of this application;
FIG. 10 is a diagram of a structure of a boost charging apparatus according to an embodiment of this application; and
FIG. 11 is a diagram of another structure of a boost charging apparatus according to an embodiment of this application.

### DESCRIPTION OF EMBODIMENTS

The following describes technical solutions in embodiments of this application with reference to accompanying drawings in embodiments of this application. In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of plural items (pieces). For example, at least one of a, b, or c may indicate: a, b, c, a and b, a and c, b and c, or a, b, and c, where a, b, and c may be singular or plural. In addition, in embodiments of this application, expressions such as "first" and "second" do not limit a quantity or a sequence.

It should be noted that, in this application, an expression such as "example" or "for example" represents giving an example, an illustration, or a description. Any embodiment or design scheme described as an "example" or "for example" in this application shall not be explained as being more preferred or having more advantages than another embodiment or design scheme. To be precise, use of the expression such as "example" or "for example" is intended to present a related concept in a specific manner.

With rapid development of related technologies of electric vehicles, a fast charging technology of a power battery of the electric vehicle becomes increasingly important. The electric vehicle can be charged in two ways: direct-current charging and alternating-current charging. Characteristics of the alternating-current charging are as follows: A charging voltage is 220 V, a charging speed is slow, and it usually takes 6 hours to 8 hours to complete full charging. Characteristics of the direct-current charging are as follows: A charging voltage is high and is usually 500 V to 800 V, and charging time is 0.5 hour to 1 hour. Therefore, increasing a battery voltage is an important means to improve a direct-current charging speed and shorten charging time of the electric vehicle.

For an electric vehicle equipped with a high-voltage power battery, a voltage of the power battery is usually higher than 700 V. At present, voltages of direct-current charging piles in markets may basically include 500 V, 750 V, and 1000 V. However, a battery pack of a high-voltage platform cannot be charged or fully charged by a charging pile of a low-voltage platform. For example, a direct-current charging pile of 500 V cannot be used for direct-current fast charging of a power battery of more than 700 V. To meet a direct-current fast charging requirement of an electric vehicle, a direct-current boost circuit may be disposed in an electric vehicle with a high-voltage power battery. However, the direct-current boost circuit that is separately disposed has problems of high costs, a large volume, and a heavy weight.

Currently, a commonly used solution in the industry is to use power devices in a control system and a motor drive system in a vehicle to boost a voltage and then charge a power battery. This may also be referred to as "reusing a powertrain of the vehicle" to boost-charge the power battery. In this solution, however, a current is generated in a motor winding in a charging process, and consequently, a wheel of the vehicle generates specific torque. In this case, the torque is suddenly released (because the current is suddenly decreased to 0) at the end of charging. This causes the vehicle to have noticeable impact or vibration, adversely affecting driving and riding experience. In a two-phase boost charging solution, an impact or vibration problem is particularly severe.

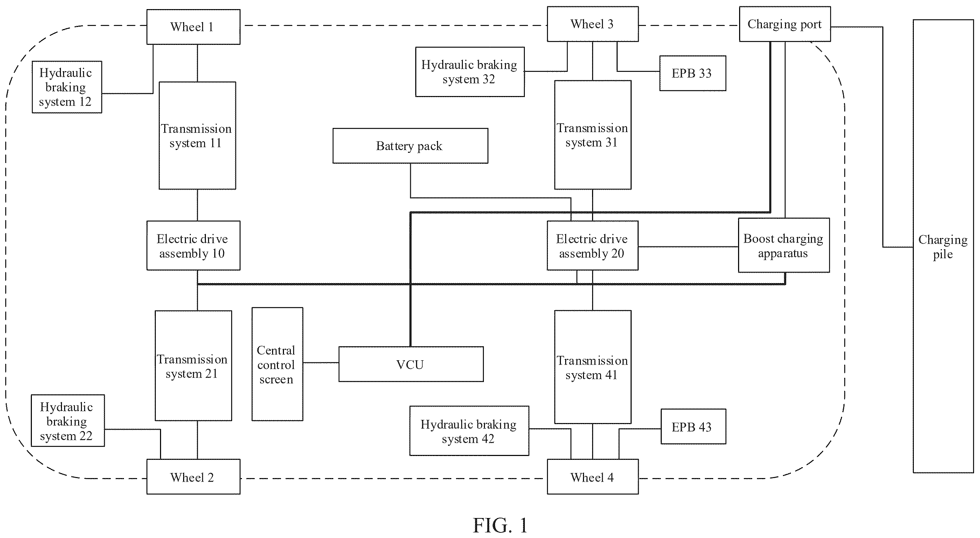

FIG. 1 is a diagram of charging a power battery by reusing a powertrain of a vehicle according to an embodiment of this application. The powertrain may be an electric drive assembly. The vehicle may include a charging port, an electric drive assembly, a battery pack, a transmission system, a hydraulic braking system, an electrical park brake (electrical park brake, EPB) system, a wheel, a controller, and the like. The controller may be a vehicle control unit (vehicle control unit, VCU) configured to control a central control screen. For example, it is assumed that the vehicle includes a wheel 1 to a wheel 4, an electric drive assembly 10, an electric drive assembly 20, a transmission system 11 to a transmission system 41, a hydraulic braking system 12 to a hydraulic braking system 42, an EPB 33, and an EPB 43. Specifically, the electric drive assembly 10 is connected to the wheel 1 and the wheel 2 through the transmission system 11 and the transmission system 21 respectively, the wheel 1 and the wheel 2 are further connected to the hydraulic braking system 12 and the hydraulic braking system 22 respectively, the electric drive assembly 20 is connected to the wheel 3 and the wheel 4 through the transmission system 31 and the transmission system 41 respectively, the wheel 3 is further connected to the hydraulic braking system 32 and the EPB 33, and the wheel 4 is further connected to the hydraulic braking system 42 and the EPB 43. The VCU may be configured to control the central control screen, the charging port, the electric drive assembly 10, and the electric drive assembly 20. In addition, the vehicle may further include a boost charging apparatus located between the charging port and the electric drive assembly 20, and the VCU may be further configured to control the boost charging apparatus.

In a possible embodiment, an example in which the electric drive assembly 20 is reused to boost-charge the battery pack is used. Specifically, when boost charging needs to be performed on the vehicle, a user may first perform setting on the central control screen (or another control device), to wake up a charging function of the vehicle, and open the charging port to enable the user to perform a connector insertion action, that is, connect the charging port to a charging pile. After the connector insertion is completed, under the control of a controller such as the VCU, the electric drive assembly 20 and the boost charging apparatus work in a boost charging mode. A current passes through a path: the charging pile, the charging port, the boost charging apparatus, the electric drive assembly 20, and the battery pack in sequence, to boost-charge the battery pack.

In the foregoing process of performing boost charging by using the electric drive assembly, small stall torque generated by a drive motor in the electric drive assembly is converted into large torque through the transmission system and the large torque is transferred to the wheel. In this case, the torque is suddenly released at the end of charging, causing the vehicle to vibration. The torque may be determined by a rotor angle of the drive motor, and changes periodically. If a rotor of the drive motor is at a stable position at which stall torque is 0 during boost charging, the vibration can be eliminated. In addition, reducing a charging current can also alleviate vehicle vibration. However, an excessive reduction in the charging current causes a sharp decrease in a charging speed. Therefore, how to properly control the charging current is an issue to be resolved.

Based on this, an embodiment of this application provides a boost charging method. The method may be applied to a vehicle, a vehicle-mounted terminal, another terminal configured to control a vehicle, or the like. The method includes: determining charging torque of a drive motor in a vehicle when the vehicle is in a boost charging state; determining a permitted charging current of the vehicle based on the charging torque, where the permitted charging current is an allowed maximum charging current; and finally charging the vehicle by using a charging current not greater than the permitted charging current. In this way, when boost charging is performed on the vehicle, impact and vibration caused by boost charging can be alleviated while ensuring a charging speed of the vehicle, to improve driving and riding experience.

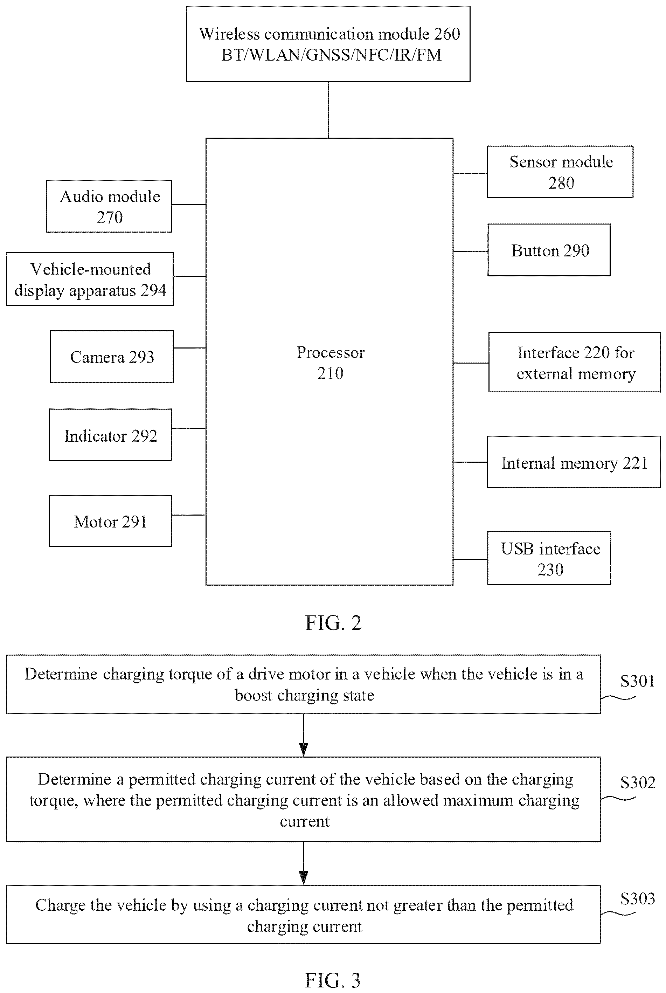

FIG. 2 is a diagram of a structure of a terminal device according to an embodiment of this application. The terminal device may be a vehicle, a vehicle-mounted terminal, another terminal configured to control a vehicle, or the like. The vehicle may include an electric vehicle and a hybrid vehicle. Optionally, the vehicle may include a road transportation tool, a water transportation tool, an air transportation tool, an industrial device, an agricultural device, an entertainment device, or the like. The vehicle is a vehicle in a broad sense. For example, the vehicle may be a transportation tool (such as a commercial vehicle, a passenger vehicle, a motorcycle, a flight vehicle, or a train), an industrial vehicle (such as a pallet truck, a trailer, or a tractor), an engineering vehicle (such as an excavator, a bulldozer, or a crane), an agricultural device (such as a lawn mower or a harvester), a recreation device, or a toy vehicle. A type of the vehicle is not specifically limited in embodiments of this application. For another example, the vehicle may alternatively be a transportation tool such as an airplane or a ship.

As shown in FIG. 2, the terminal device may include a processor 210, an interface 220 for external memory, an internal memory 221, a universal serial bus (universal serial bus, USB) interface 230, a wireless communication module 260, an audio module 270, a sensor module 280, a button 290, a motor 291, an indicator 292, a camera 293, a vehicle-mounted display apparatus 294, and the like.

It may be understood that, a structure illustrated in this embodiment of this application does not constitute a specific limitation on the terminal device. In some other embodiments of this application, the terminal device may include more or fewer components than those shown in the figure, or some components may be combined, or some components may be split, or a different component arrangement may be used. The components shown in the figure may be implemented by hardware, software, or a combination of software and hardware.

The processor 210 includes one or more processing units. For example, the processor 210 includes an application processor (application processor, AP) a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution. Optionally, the controller is a vehicle controller, or may be a controller of a drive system. In a possible example, the controller is a VCU, a controller of a battery management system (battery management system, BMS), or a microcontroller unit (microcontroller unit, MCU) in a powertrain.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and therefore improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 210 to a peripheral device such as the vehicle-mounted display apparatus 294 or the camera 293. The MIPI interface includes a camera serial interface (camera serial interface, CSI), a display serial interface (display serial interface, DSI), and the like. In some embodiments, the processor 210 communicates with the camera 293 through the CSI, to implement a photographing function of the terminal device. The processor 210 communicates with the vehicle-mounted display apparatus 294 through the DSI, to implement a display function of the terminal device.

The USB interface 230 is an interface that conforms to a USB standard specification, and may be specifically a mini USB interface, a micro USB interface, a USB Type-C interface, or the like. The USB interface 230 may be configured to connect to a charger to charge the terminal device, may be configured to transmit data between the terminal device and a peripheral device, or may be configured to connect to a headset for playing audio through the headset. The interface may alternatively be configured to connect to another terminal device, for example, an augmented reality (augmented reality, AR) device.

It may be understood that an interface connection relationship between the modules illustrated in this embodiment of this application is merely an example for description, and does not constitute a limitation on the structure of the terminal device. In some other embodiments of this application, the terminal device may alternatively use an interface connection manner different from that in the foregoing embodiments or a combination of a plurality of interface connection manners.

A wireless communication function of the terminal device may be implemented by using an antenna, the wireless communication module 260, the modem processor, the baseband processor, and the like.

The antenna is configured to transmit and receive electromagnetic wave signals. Each antenna in the terminal device may be configured to cover one or more communication frequency bands. Different antennas may be further reused, to improve antenna utilization. For example, the antenna may be reused as a diversity antenna of a wireless local area network. In some other embodiments, the antenna may be used in combination with a tuning switch.

The wireless communication module 260 may provide a wireless communication solution that is applied to the terminal device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 260 may be one or more components integrating at least one communication processing module. The wireless communication module 260 receives an electromagnetic wave through an antenna, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave through the antenna for radiation.

In some embodiments, the terminal device may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device implements a display function by using the GPU, the vehicle-mounted display apparatus 294, the application processor, and the like. The GPU is a microprocessor for image processing, and is connected to the vehicle-mounted display apparatus 294 and the application processor. The GPU is configured to perform mathematical and geometric computing for graphics rendering. The processor 210 may include one or more GPUs that execute program instructions to generate or change display information.

The vehicle-mounted display apparatus 294 is configured to display an image, a video, and the like. The vehicle-mounted display apparatus 294 may include a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini light-emitting diode (mini light-emitting diode, Mini-LED), a micro light-emitting diode (micro-LED), a micro organic light-emitting diode (micro-OLED), or a quantum dot light-emitting diode (quantum dot light-emitting diode, QLED). Optionally, the terminal device may include one or more vehicle-mounted display apparatuses 294.

In some embodiments, the vehicle-mounted display apparatus 294 includes a display having an interaction function. The display may be a physical display, and is an important component of an in-vehicle infotainment system. For example, a plurality of displays are disposed in a vehicle cockpit, for example, a digital dashboard display, a central control screen, a display in front of a front passenger seat, a display in front of a left rear seat, a display in front of a right rear seat, and an armrest screen (for example, a display at an armrest of two rear seats). Even a vehicle window may be used as a display for display.

The camera 293 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as red green blue (red green blue, RGB) or luminance chrominance (luminance chrominance, YUV). Optionally, the terminal device may include one or more cameras 293.

The interface 220 for external memory may be configured to connect to an external memory card, for example, a micro SD card, to extend a storage capability of the terminal device. The external memory card communicates with the processor 210 through the interface 220 for external memory, to implement a data storage function. For example, files such as music and videos are stored in the external memory card.

The internal memory 221 may be configured to store computer-executable program code, and the executable program code includes instructions. The internal memory 221 may include a program storage area and a data storage area. The program storage area may store an operating system, an application required by at least one function (for example, a voice playing function or an image playing function), and the like. The data storage area may store data (for example, audio data or a phone book) created in a process of using the terminal device. In addition, the internal memory 221 may include a high-speed random access memory, or may include a nonvolatile memory, for example, at least one magnetic disk storage device, a flash storage device, or a universal flash storage (universal flash storage, UFS). The processor 210 performs various function applications and data processing of the terminal device by running the instructions stored in the internal memory 221 and/or the instructions stored in the memory disposed in the processor 210.

The audio module 270 is configured to convert digital audio information into an analog audio signal for output, and is also configured to convert an analog audio input into a digital audio signal. The audio module 270 may be further configured to encode and decode an audio signal. In some embodiments, the audio module 270 may be disposed in the processor 210, or some functional modules of the audio module 270 are disposed in the processor 210. The terminal device may use the audio module 270 to implement music playing, recording, and the like. The audio module 270 may include a speaker, a receiver, a microphone, a headset jack, an application processor, and the like, to implement an audio function.

The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch component". The touch sensor may be disposed on a display in the vehicle-mounted display apparatus 294. The touch sensor and the display form a touchscreen, also referred to as a "touch screen". The touch sensor is configured to detect a touch operation performed on or near the touch sensor. The touch sensor may transfer the detected touch operation to the application processor to determine a type of the touch event. A visual output related to the touch operation may be provided by using the display. In some other embodiments, the touch sensor may alternatively be disposed on a surface of the terminal device at a position different from a position of the display.

The button 290 includes a square control button, a power button, a volume button, and the like. The button 290 may be a mechanical button, or may be a touch button. The terminal device may receive a button input, and generate a button signal input related to a user setting and function control of the terminal device.

The motor 291 may be configured to provide touch vibration feedback. For example, touch operations performed on different applications may correspond to different vibration feedback effect. The motor 291 may also correspond to different vibration feedback effect for touch operations performed on different areas of a display in the vehicle-mounted display apparatus 294. Touch vibration feedback effect may be further customized.

The indicator 292 may be an indicator light, may indicate a change in power, and may also indicate a message, a turn signal, a seat belt warning light, and the like.

FIG. 3 is a schematic flowchart of a boost charging method according to an embodiment of this application. The method may be applied to a terminal device. The terminal device may be the terminal device provided above. The method may include the following steps.

S301: Determine charging torque of a drive motor in a vehicle when the vehicle is in a boost charging state.

The vehicle may be a vehicle including a single drive motor, or may be a vehicle including two drive motors, or may be a vehicle including a plurality of drive motors. When the vehicle includes at least two drive motors, any one of the at least two drive motors may be reused to boost-charge the vehicle. Therefore, charging torque of the reused drive motor needs to be determined. Optionally, the drive motor may support two-phase boost charging.

In addition, the charging torque of the drive motor may also be briefly referred to as motor torque. In an actual application, the charging torque of the drive motor may be transferred to a wheel through a transmission system, and the torque correspondingly transferred to the wheel may be referred to as wheel-end torque. Therefore, the charging torque of the drive circuit may also be replaced with the wheel-end torque of the wheel.

In a possible embodiment, determining the charging torque of the drive motor in the vehicle may specifically include: determining the charging torque of the drive motor based on a phase of the drive motor. The phase of the drive motor may be specifically a rotor angle position of the drive motor (namely, a position angle of a rotor of the drive motor), and the rotor angle position may be any angle in [0°, 360°].

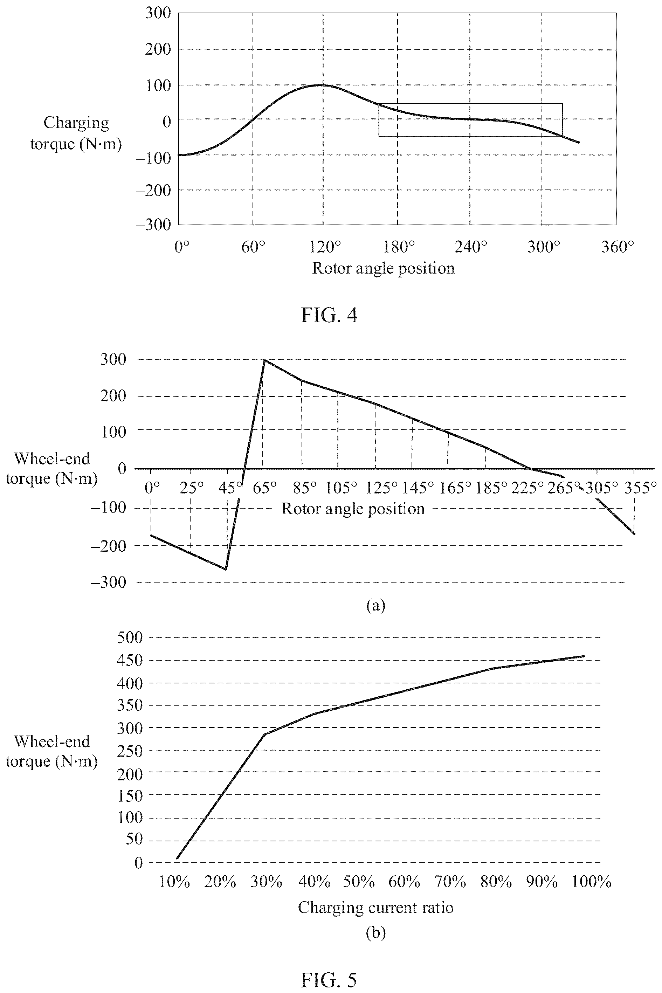

For example, FIG. 4 is a diagram of charging torque corresponding to different rotor angle positions. Specifically, when the rotor angle position is 0°, the charging torque is -100 newton meter (N·m); when the rotor angle position is 60°, the charging torque is 0 N·m; when the rotor angle position is between 0° and 120°, the charging torque is gradually increased; when the rotor angle position is 120°, the charging torque is 100 N·m; when the rotor angle position is between 120° and 360°, the charging torque is gradually decreased; and when the rotor angle position is 240°, the charging torque is 0 N·m. In FIG. 4, an example in which a charging current is fixed is used for description.

It can be learned from the foregoing figure that when the rotor angle position is between 60° and 240°, a value of the charging torque is a positive value, where 60° and 240° are two balance points of the rotor of the drive motor. These two points are the balance points. Therefore, when the rotor angle position is between 60° and 240°, it may be considered that the rotor of the drive motor rotates in a positive direction; and when the rotor angle position is between 0° and 60° or between 240° and 360°, it may be considered that the rotor of the drive motor rotates in a reverse direction. When a corresponding rotor angle position after rotation of the rotor of the drive motor is approximately between 170° and 340°, it may be considered that the rotor of the drive motor is in a balanced state. In this case, the charging torque is approximately between -50 N·m and 50 N·m.

It may be understood that the charging torque corresponding to the different rotor angle positions shown in FIG. 4 is merely an example, and does not constitute a limitation on embodiments of this application. In addition, when the rotor angle position is approximately between 170° and 340°, the rotor of the drive motor is generally in the balanced state. When the rotor angle position of the drive motor is in an interval outside the range of 170° to 340°, the rotor of the drive motor is in an unbalanced state, and in this case, the rotor rotates until the rotor is in the balanced state.

In an actual application, the charging torque of the drive motor is related to a current of the drive motor and the rotor angle position of the drive motor. Correspondingly, determining the charging torque of the drive motor may be replaced with: determining the current of the drive motor, and/or determining the rotor angle position of the drive motor. Then, the charging torque of the drive motor is determined based on the current and/or the rotor angle position of the drive motor; or the following step of determining a permitted charging current is directly performed based on the current and/or the rotor angle position of the drive motor.

For example, (a) in FIG. 5 is a diagram of wheel-end torque corresponding to different rotor angle positions. Specifically, when the rotor angle position is between 0° and 55° or between 225° and 360°, the wheel-end torque is a negative value, and reaches a maximum value when the rotor angle position is 45°; and when the rotor angle position is between 55° and 225°, the wheel-end torque is a positive value, and reaches a maximum value when the rotor angle position is 65°. For example, (b) in FIG. 5 is a diagram of wheel-end torque corresponding to different charging current ratios. Specifically, at a same rotor angle position, a charging current is in a positive correlation relationship with the wheel-end torque, and the charging current changes fast first and then slowly with the wheel-end torque.

It may be understood that the wheel-end torque corresponding to the different rotor angle positions shown in (a) in FIG. 5 and the wheel-end torque corresponding to the different charging current ratios shown in (b) in FIG. 5 are merely examples, and do not constitute a limitation on embodiments of this application.

In a possible embodiment, determining the charging torque of the drive motor in the vehicle may specifically include: obtaining the current of the drive motor and the rotor angle position of the drive motor, and determining the charging torque of the drive motor based on the current and the rotor angle position.

In another possible embodiment, S301 may alternatively be replaced with: determine a current of the drive motor when the vehicle is in the boost charging state, and/or determine a rotor angle position of the drive motor when the vehicle is in the boost charging state. In embodiments of this application, an example in which the charging torque of the drive motor is determined is used for description.

The foregoing step of determining the charging torque of the drive motor or determining the current and/or the rotor angle position of the drive motor may be real-time determining, or may be periodic or aperiodic determining. This is not specifically limited in embodiments of this application.

Further, the method may include: detecting a charging status of the vehicle, or detecting a charging intention of the vehicle. When it is detected that the vehicle is in the boost charging state, step S301 is performed. When it is detected that the vehicle is in a non-boost charging state, the vehicle is normally charged. In other words, the vehicle is directly charged by using a charging voltage provided by a charging pile, and there is no need to reuse the drive motor for boost processing.

S302: Determine a permitted charging current of the vehicle based on the charging torque, where the permitted charging current is an allowed maximum charging current.

The allowed maximum charging current may be considered from different perspectives. For example, whether the vehicle is in a safe state, whether noise vibration harshness (noise vibration harshness, NVH) generated during charging is in an acceptable range, a range of a charging current that can be supported by the vehicle in the safe state, and the like are considered. In an example, the allowed maximum charging current includes a maximum charging current allowed when the vehicle is in the safe state. In another example, the allowed maximum charging current includes a maximum charging current allowed when the noise vibration harshness NVH of the vehicle is less than a preset threshold.

In a possible embodiment, determining the permitted charging current of the vehicle based on the charging torque may specifically include: querying, from first preset correspondence information based on the charging torque, a permitted charging current corresponding to the charging torque, to determine the permitted charging current of the vehicle. The first preset correspondence information may indicate correspondences between different charging torque and different permitted charging currents, that is, indicate permitted charging currents corresponding to different charging torque. Optionally, the permitted charging currents corresponding to the different charging torque may be obtained through measurement in advance, and may be stored in the terminal device.

For example, the permitted charging currents corresponding to the different charging torque may be shown in Table 1. The different charging torque may include 100 N·m, 150 N·m, 200 N·m, 250 N·m, 300 N·m, and the like, and the permitted charging currents respectively corresponding to the different charging torque may be 100 A, 95 A, 85 A, 75 A, 50 A, and the like.

**Table 1**

| | Charging torque (N·m) | | | | | |
|---|---|---|---|---|---|---|
| | 100 | 150 | 200 | 250 | 300 | ... |
| Permitted charging current (A) | 100 | 95 | 85 | 70 | 50 | ... |

It may be understood that the permitted charging currents corresponding to the different charging torque shown in Table 1 are merely examples, and do not constitute a limitation on embodiments of this application.

S303: Charge the vehicle by using a charging current not greater than the permitted charging current.

The charging current not greater than the permitted charging current may mean that a charging current used to charge the vehicle may be less than or equal to the permitted charging current. Charging the vehicle by using the charging current may specifically include: charging a battery pack in the vehicle by using the charging current. The battery pack may also be referred to as a power battery or briefly referred to a battery.

In a possible embodiment, when the battery is charged by using the charging current, the charging current may be gradually increased. For example, the charging current is gradually increased from 0, and it is ensured that the increased charging current is not greater than the permitted charging current. For example, the charging current is increased to be equal to the permitted charging current. Optionally, the vehicle is charged by using a gradually increasing charging current not greater than the permitted charging current, and an increase rate of the charging current is kept less than a preset rate. In the foregoing, the increase rate of the charging current is kept less than the preset rate, to alleviate vehicle vibration that may be caused by a rapid increase in the charging current.

In embodiments of this application, when the vehicle is in the boost charging state, the charging torque of the drive motor in the vehicle may be determined; the permitted charging current of the vehicle is determined based on the charging torque, where the permitted charging current is the allowed maximum charging current; and finally, the vehicle is charged by using the charging current not greater than the permitted charging current. In this way, when boost charging is performed on the vehicle, impact and vibration caused by boost charging can be alleviated while ensuring a charging speed of the vehicle, to improve driving and riding experience.

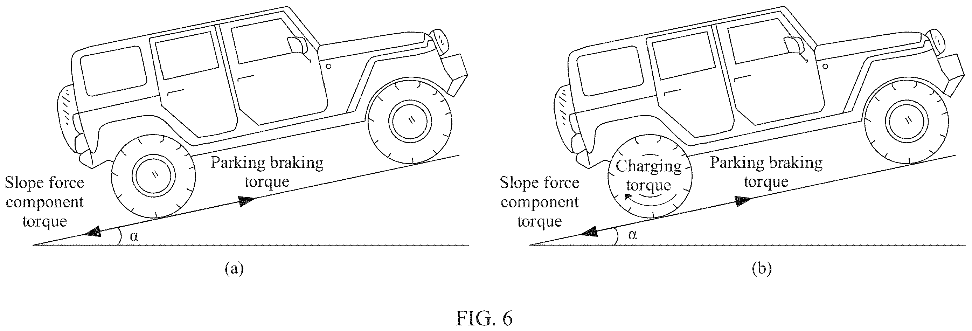

Further, as shown in (a) in FIG. 6, when the vehicle is on the ground with a specific slope (for example, the slope is α), the vehicle generates downward slope force component torque in a direction parallel to the slope due to effect of gravity, and a braking apparatus of the vehicle generates specific parking braking torque in a direction opposite to the slope force component torque. In addition, as shown in (b) in FIG. 6, the slope force component torque, the parking braking torque, and the charging torque reach a balanced state, to ensure that the vehicle does not slide leftward or rightward.

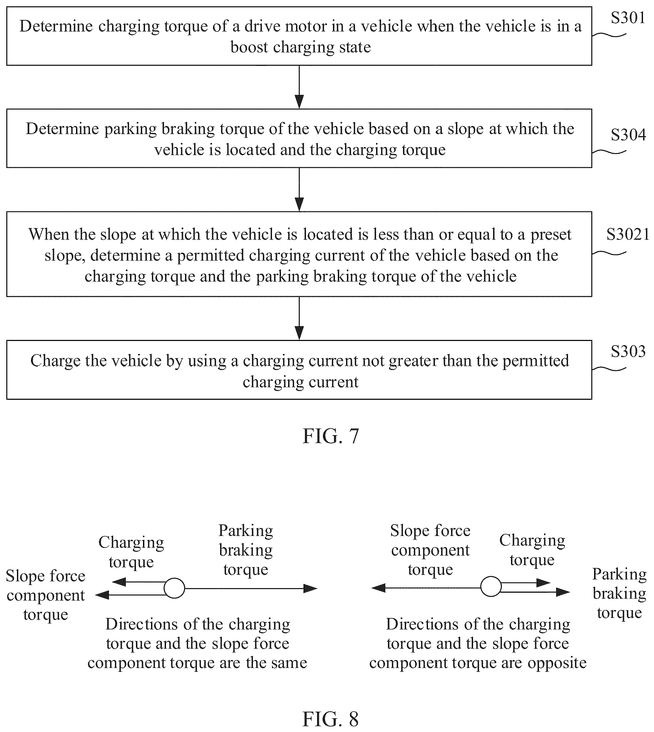

Correspondingly, with reference to FIG. 3, as shown in FIG. 7, when the vehicle is on the ground with a specific slope (for example, the slope is α), S302 may specifically include S3021.

S3021: When a slope at which the vehicle is located is less than or equal to a preset slope, determine the permitted charging current of the vehicle based on the charging torque and parking braking torque of the vehicle.

Optionally, the slope at which the vehicle is located may be obtained through measurement by using one or more sensors installed in the vehicle or a vehicle-mounted device, or may be obtained after specific processing and calculation are performed on data obtained through measurement by using one or more sensors. This is not specifically limited in embodiments of this application.

The parking braking torque of the vehicle may be parking braking torque actually generated by a parking braking apparatus of the vehicle. Optionally, the parking braking apparatus may be an EPB system, or may be a braking apparatus other than the EPB system. For example, the braking apparatus may include a mechanical braking apparatus or the like. This is not specifically limited in embodiments of this application.

In addition, the preset slope may be set in the terminal device in advance. For example, the preset slope may be obtained by a person skilled in the art through measurement based on an actual situation, and the preset slope obtained through measurement may be configured in the terminal device for use. For example, the preset slope may be 10°.

In a possible embodiment, determining the permitted charging current of the vehicle based on the charging torque and the parking braking torque of the vehicle may specifically include: determining, from second preset correspondence information based on the charging torque and the parking braking torque of the vehicle, a permitted charging current corresponding to the charging torque and the parking braking torque. The second preset correspondence information indicates permitted charging currents corresponding to different charging torque and different parking braking torque. Optionally, the second preset correspondence information may be obtained through measurement in advance, and may be stored in the terminal device.

For example, the permitted charging currents corresponding to the different charging torque and the different parking braking torque may be shown in Table 2. The different charging torque may include 100 N·m, 200 N·m, 300 N·m, and the like. The different parking braking torque may include 100 N·m, 200 N·m, 300 N·m, and the like. The corresponding permitted charging currents may be 100 A, 90 A, 85 A, 80 A, 70 A, 50 A, and the like.

**Table 2**

| Permitted charging current (A) | | Charging torque (N·m) | | | |
|---|---|---|---|---|---|
| | | 100 | 200 | 300 | ... |
| Parking braking torque (N·m) | 100 | 100 | 100 | 90 | ... |
| | 200 | 100 | 85 | 80 | ... |
| | 300 | 80 | 70 | 50 | ... |
| | ... | ... | ... | ... | ... |

It may be understood that the permitted charging currents corresponding to the different charging torque and the different parking braking torque shown in Table 2 are merely examples, and do not constitute a limitation on embodiments of this application.

Optionally, as shown in FIG. 7, before S3021, the method may further include a step of determining the parking braking torque of the vehicle. In other words, the method may further include S304.

S304: Determine the parking braking torque of the vehicle based on the slope at which the vehicle is located and the charging torque.

Optionally, determining the parking braking torque of the vehicle based on the slope at which the vehicle is located and the charging torque may specifically include: determining slope force component torque based on a weight of the vehicle and the slope at which the vehicle is located; and determining the parking braking torque of the vehicle based on the slope force component torque and the charging torque.

The weight of the vehicle includes a body weight of the vehicle, and may further include a weight of a passenger and/or a weight of goods on the vehicle, and the like. The weight of the vehicle may be stored in the terminal device in advance, or may be obtained through measurement by using a sensor or the like on the vehicle. This is not specifically limited in embodiments of this application.

In a possible embodiment, determining the slope force component torque based on the weight of the vehicle and the slope at which the vehicle is located may include the following: First, a slope force component generated by the vehicle in a direction parallel to the slope is determined based on the weight of the vehicle and the slope at which the vehicle is located. For example, a product of the weight of the vehicle and the slope at which the vehicle is located is determined as the slope force component. Then, the slope force component torque is determined based on the slope force component and a wheel radius of the vehicle. For example, a product of the slope force component and the wheel radius is determined as the slope force component torque.

The wheel radius may be configured in advance, or may be obtained through measurement. A specific factor that affects the wheel radius may include tire pressure, a wheel hub size, whether the vehicle is modified, and the like. This is not specifically limited in embodiments of this application.

In a possible embodiment, determining the parking braking torque of the vehicle based on the slope force component torque and the charging torque may include the following: When a rotation direction of the drive motor is the same as a direction of the slope force component, a sum of the slope force component torque and wheel-end torque corresponding to the charging torque may be determined as the parking braking torque of the vehicle. When the rotation direction of the drive motor is opposite to the direction of the slope force component, a difference between the slope force component torque and the wheel-end torque corresponding to the charging torque may be determined as the parking braking torque of the vehicle. For example, FIG. 8 is a diagram of the slope force component torque, the charging torque, and the parking braking torque in a case in which the rotation direction of the drive motor is the same as or opposite to the direction of the slope force component.

The rotation direction of the drive motor may be determined based on a rotor angle position of the drive motor. For example, with reference to FIG. 4, when the rotor angle position of the drive motor is between 60° and 240°, it may be considered that the rotor of the drive motor rotates in a positive direction; and when the rotor angle position is between 0° and 60° or between 240° and 360°, it may be considered that the rotor of the drive motor rotates in a reverse direction.

Further, when the vehicle is on the ground with a specific slope and the slope at which the vehicle is located is greater than the preset slope, power-limited charging may be performed on the vehicle. In other words, corresponding charging power is less than a specific power threshold. For example, the vehicle is charged by using a charging current less than a preset current threshold.

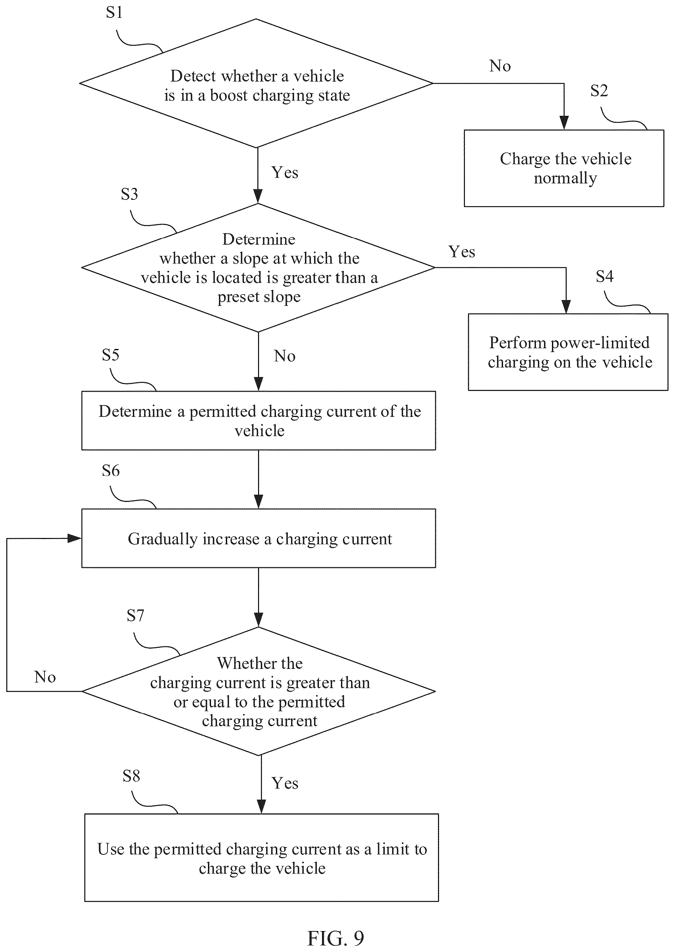

For ease of understanding, the following uses FIG. 9 as an example to describe the technical solutions provided in embodiments of this application. As shown in FIG. 9, the boost charging method may specifically include the following steps. S1: Detect whether a vehicle is in a boost charging state. S2: If the vehicle is in a non-boost state (that is, No), charge the vehicle normally. S3: If the vehicle is in a boost charging state (that is, Yes), determine whether a slope at which the vehicle is located is greater than a preset slope. S4: If the slope at which the vehicle is located is greater than the preset slope (that is, Yes), perform power-limited charging on the vehicle. S5: If the slope at which the vehicle is located is less than or equal to the preset slope (that is, No), determine a permitted charging current of the vehicle. S6: Gradually increase a charging current, where an increase rate of the charging current may be less than a preset rate. S7: Determine whether the charging current is greater than or equal to the permitted charging current, and if the charging current is not greater than or equal to the permitted charging current, return to S6. S8: If the charging current is greater than or equal to the permitted charging current, use the permitted charging current as a limit to charge the vehicle.

In embodiments of this application, when the slope at which the vehicle is located is less than or equal to the preset slope, the permitted charging current of the vehicle may be determined based on the charging torque and the parking braking torque of the vehicle, to further improve accuracy of the determined permitted charging current. In this way, when the vehicle is charged by using the charging current not greater than the permitted charging current, a charging speed of the vehicle can be ensured, and impact and vibration caused by boost charging when the vehicle is at a specific slope are further alleviated.

The foregoing mainly describes the solutions provided in embodiments of this application from the perspective of the terminal device performing the method. It may be understood that, to implement the foregoing functions, the terminal device or the like includes corresponding hardware structures and/or software modules for executing the functions. A person skilled in the art should easily be aware that, units and algorithm steps in examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it shall not be considered that the implementation goes beyond the scope of this application.

In embodiments of this application, the terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used.

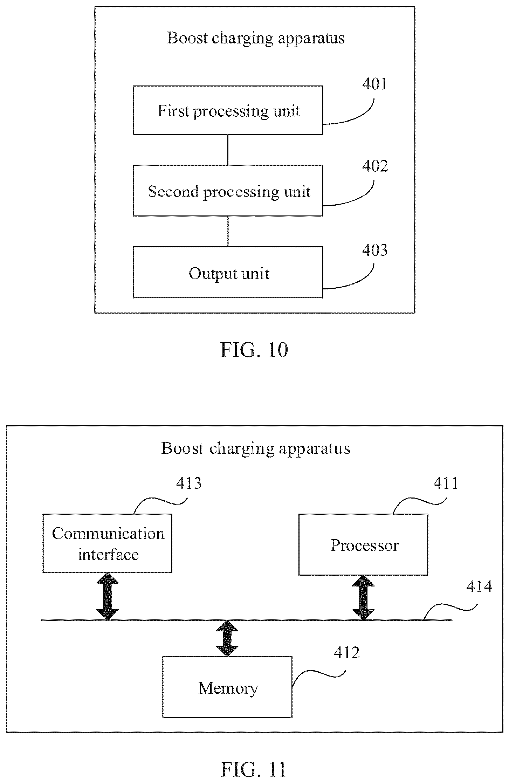

When an integrated unit is used, FIG. 10 is a diagram of a possible structure of a boost charging apparatus according to an embodiment of this application. The apparatus may be used as a terminal device or a chip used in a terminal device. The apparatus includes a first processing unit 401, a second processing unit 402, and an output unit 403. The first processing unit 401 may be configured to support the apparatus in performing S301 in the foregoing method embodiment. The second processing unit 402 may be configured to support the apparatus in performing S302 in the foregoing method embodiment. The output unit 403 may be configured to support the apparatus in performing S303 in the foregoing method embodiment. Further, the second processing unit 402 may be further configured to support the apparatus in performing one or more steps in S3021 and S304 in the foregoing method embodiment.

Based on hardware implementation, the first processing unit 401 and the second processing unit 402 in this embodiment of this application may be processors of the apparatus, and the output unit 403 may be a communication interface of the apparatus. The communication interface may also be referred to as an interface circuit or a transceiver. A receiver and a transmitter may be integrated into the transceiver.

FIG. 11 is a diagram of another possible structure of the boost charging apparatus in the foregoing embodiment according to an embodiment of this application. The apparatus includes a processor 411, and may further include a memory 412, a communication interface 413, and a bus 414. The processor 411, the memory 412, and the communication interface 413 are connected through the bus 414.

The processor 411 is configured to control and manage an action of the apparatus. The processor 411 is configured to perform one or more steps in S301, S302, and S304 in the foregoing method embodiment, and another technical process described in this specification. The communication interface 413 is configured to support the apparatus in communication, for example, support the apparatus in communicating with a vehicle.

In this embodiment of this application, the processor 411 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination for implementing a computing function, for example, a combination of one or more microprocessors, or a combination of a digital signal processor and a microprocessor. The bus 414 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in the figure, but this does not mean that there is only one bus or only one type of bus.

For all related content of each step in the foregoing method embodiment, refer to function descriptions of a corresponding functional module. Details are not described herein again. The boost charging apparatuses provided in embodiments of this application are configured to perform functions of corresponding devices in the foregoing embodiment, and therefore can achieve same effects as the foregoing method.

An embodiment of this application further provides a terminal device. The terminal device includes a processor and a memory. The memory stores instructions. When the instructions are run on the processor, the terminal device is enabled to perform the boost charging method provided in the foregoing method embodiment. Optionally, the terminal device may be a vehicle-mounted terminal.

According to another aspect, an embodiment of this application further provides a vehicle, and the vehicle includes the boost charging apparatus provided above.

An embodiment of this application further provides a chip system. The chip system may be used in the terminal device in the foregoing embodiment. The chip system includes at least one processor and at least one interface circuit. The processor may be a processor in the foregoing terminal device. The processor and the interface circuit may be interconnected through a line. The processor may receive computer instructions from a memory of the terminal device through the interface circuit, and execute the computer instructions. When the computer instructions are executed by the processor, the terminal device may be enabled to perform steps performed by a mobile phone or a tablet computer in the foregoing embodiment. Certainly, the chip system may further include another discrete device. This is not specifically limited in embodiments of this application.

According to another aspect of this application, a computer-readable storage medium is provided. The computer-readable storage medium stores a computer program or instructions. When the computer program or the instructions are run, the boost charging method provided in the foregoing method embodiment is performed.

According to still another aspect of this application, a computer program product is provided. The computer program product includes a computer program (which may also be referred to as code or instructions). When the computer program is run, a computer is enabled to perform the boost charging method provided in the foregoing method embodiment.

Based on the descriptions of the foregoing implementations, a person skilled in the art may clearly understand that, for the purpose of convenient and brief description, division into the foregoing functional modules is merely an example for description. In an actual application, the foregoing functions may be allocated to different functional modules and implemented according to a requirement. In other words, an inner structure of an apparatus is divided into different functional modules to implement all or some of the foregoing functions.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in a plurality of different places. Some or all of the units may be selected according to an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, a part that essentially makes a contribution and that is of the technical solutions in embodiments of this application or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A boost charging method, wherein the method comprises:
determining charging torque of a drive motor in a vehicle when the vehicle is in a boost charging state;
determining a permitted charging current of the vehicle based on the charging torque, wherein the permitted charging current is an allowed maximum charging current; and
charging the vehicle by using a charging current not greater than the permitted charging current.

2. The method according to claim 1, wherein the allowed maximum charging current comprises a maximum charging current allowed when the vehicle is in a safe state.

3. The method according to claim 1, wherein the allowed maximum charging current comprises a maximum charging current allowed when noise vibration harshness NVH of the vehicle is less than a preset threshold.

4. The method according to any one of claims 1 to 3, wherein determining the permitted charging current of the vehicle based on the charging torque comprises:
when a slope at which the vehicle is located is less than or equal to a preset slope, determining the permitted charging current of the vehicle based on the charging torque and parking braking torque of the vehicle.

5. The method according to claim 4, wherein determining the permitted charging current of the vehicle based on the charging torque and the parking braking torque of the vehicle comprises:
determining, from preset correspondence information based on the charging torque and the parking braking torque, a permitted charging current corresponding to the charging torque and the parking braking torque, wherein
the preset correspondence information indicates permitted charging currents corresponding to different charging torque and different parking braking torque.

6. The method according to claim 4 or 5, wherein the method further comprises:
determining the parking braking torque of the vehicle based on the slope at which the vehicle is located and the charging torque.

7. The method according to claim 6, wherein determining the parking braking torque of the vehicle based on the slope at which the vehicle is located and the charging torque comprises:
determining slope force component torque based on a weight of the vehicle and the slope at which the vehicle is located; and
determining the parking braking torque of the vehicle based on the slope force component torque and the charging torque.

8. The method according to any one of claims 1 to 7, wherein determining the charging torque of the drive motor in the vehicle comprises:
determining the charging torque of the drive motor based on a phase of the drive motor.

9. The method according to any one of claims 1 to 8, wherein charging the vehicle by using the charging current not greater than the permitted charging current comprises:
charging the vehicle by using a gradually increasing charging current not greater than the permitted charging current, wherein an increase rate of the charging current is less than a preset rate.

10. The method according to any one of claims 1 to 9, wherein the drive motor supports two-phase boost charging.

11. A boost charging apparatus, wherein the apparatus comprises:
a first processing unit, configured to determine charging torque of a drive motor in a vehicle when the vehicle is in a boost charging state;
a second processing unit, configured to determine a permitted charging current of the vehicle based on the charging torque, wherein the permitted charging current is an allowed maximum charging current; and
an output unit, configured to charge the vehicle by using a charging current not greater than the permitted charging current.

12. The apparatus according to claim 11, wherein the allowed maximum charging current comprises a maximum charging current allowed when the vehicle is in a safe state.

13. The apparatus according to claim 11, wherein the allowed maximum charging current comprises a maximum charging current allowed when noise vibration harshness NVH of the vehicle is less than a preset threshold.

14. The apparatus according to any one of claims 11 to 13, wherein the second processing unit is further configured to:
when a slope at which the vehicle is located is less than or equal to a preset slope, determine the permitted charging current of the vehicle based on the charging torque and parking braking torque of the vehicle.

15. The apparatus according to claim 14, wherein the second processing unit is further configured to:
determine, from preset correspondence information based on the charging torque and the parking braking torque, a permitted charging current corresponding to the charging torque and the parking braking torque, wherein
the preset correspondence information indicates permitted charging currents corresponding to different charging torque and different parking braking torque.

16. The apparatus according to claim 14 or 15, wherein the second processing unit is further configured to:
determine the parking braking torque of the vehicle based on the slope at which the vehicle is located and the charging torque.

17. The apparatus according to claim 16, wherein the second processing unit is further configured to:
determine slope force component torque based on a weight of the vehicle and the slope at which the vehicle is located; and
determine the parking braking torque of the vehicle based on the slope force component torque and the charging torque.

18. The apparatus according to any one of claims 11 to 17, wherein the first processing unit is further configured to:
determine the charging torque of the drive motor based on a phase of the drive motor.

19. The apparatus according to any one of claims 11 to 18, wherein the output unit is further configured to:
charge the vehicle by using a gradually increasing charging current not greater than the permitted charging current, wherein an increase rate of the charging current is less than a preset rate.

20. The apparatus according to any one of claims 11 to 19, wherein the drive motor supports two-phase boost charging.

21. A terminal device, wherein the terminal device comprises a processor and a memory, the memory stores instructions, and the processor runs the instructions, to enable the terminal device to perform the boost charging method according to any one of claims 1 to 10.

22. A vehicle, wherein the vehicle comprises the boost charging apparatus according to any one of claims 11 to 20.

23. A computer-readable storage medium, wherein the computer-readable storage medium stores instructions, and when the instructions are executed by a device, the device is enabled to perform the boost charging method according to any one of claims 1 to 10.
